# EUROPÄISCHE PATENTSCHRIFT

(11) **EP 3 275 589 B1**
(45) Veröffentlichungstag und Bekanntmachung des Hinweises auf die Patenterteilung: **25.11.2020**
(21) Anmeldenummer: 17182730.6
(22) Anmeldetag: 24.07.2017
(51) Int. Cl.: B23Q 1/00, B23Q 11/12

(54) **ARBEITSSPINDEL-KÜHLEINRICHTUNG UND WERKZEUGMASCHINEN-BEARBEITUNGSEINHEIT MIT EINER DERARTIGEN ARBEITSPINDEL-KÜHLEINRICHTUNG**
WORKING SPINDLE COOLING DEVICE AND MACHINE TOOL PROCESSING UNIT WITH A SIMILAR WORKING SPINDLE COOLING DEVICE
DISPOSITIF DE REFROIDISSEMENT D'UNE BROCHE D'USINAGE ET UNITÉ D'USINAGE DE MACHINE-OUTIL AVEC UN TEL DISPOSITIF DE REFROIDISSEMENT

(30) Priorität: 29.07.2016 DE 102016114036
(43) Veröffentlichungstag der Anmeldung: 31.01.2018
(73) Patentinhaber: Ott-Jakob Spanntechnik GmbH, 87663 Lengenwang (DE)
(72) Erfinder: Greif, Josef, 87496 Friesenried (DE); Mohr, Peter, 87487 Wiggensbach (DE)
(74) Vertreter: Charrier Rapp & Liebau

(56) Entgegenhaltungen:
- EP-A1- 2 058 085
- JP-A- H1 119 848
- JP-A- 2010 260 150

## Beschreibung

Die Erfindung betrifft eine Arbeitsspindel-Kühleinrichtung nach dem Oberbegriff des Anspruchs 1. Eine derartige Arbeitsspindel-Kühleinrichtung ist aus der JP 2010 260150 A bekannt. Die Erfindung betrifft außerdem eine Werkzeugmaschinen Bearbeitungseinheit mit einer derartigen Arbeitsspindel-Kühleinrichtung.

Bei modernen Werkzeugmaschinen oder Bearbeitungszentren wird die Haupt- oder Arbeitsspindel in der Regel als Motorspindel ausgeführt. Hierbei bildet die Arbeitspindel die Antriebswelle des Antriebsmotors, so dass das Drehmoment direkt über den Rotor auf die mit einer integrierten Werkzeugschnittstelle und einer Spannvorrichtung versehene Arbeitsspindel übertragen werden kann. Dadurch können hohe Drehzahlen sowie kurze Beschleunigungs- und Bremszeiten erreicht werden. Allerdings wird durch die Integration des Antriebs und die dadurch bedingte Erwärmung eine Kühlung der Arbeitsspindel erforderlich.

Aus der JP 2010 260150 A ist eine Vorrichtung zur Kühlung der Arbeitspindel einer Werkzeugmaschine bekannt. Diese enthält ein Gehäuse, einen innerhalb des Gehäuses angeordneten Zuführkanal für die Zuführung eines Kühlmittels, einen innerhalb des Gehäuses angeordneten Rückführkanal für die Rückführung des Kühlmittels aus der Arbeitsspindel und eine innerhalb des Gehäuses angeordnete Dichtungseinrichtung, die eine stationäre Buchse, eine relativ zur stationären Buchse drehbare Buchse und zwischen der stationären Buchse und der drehbaren Buchse angeordnete Dichtungen zur Abdichtung eines Ringspalts zwischen der der stationären Buchse und der drehbaren Buchse enthält.

Bei einem möglichen Versatz zwischen den stationären und rotierenden Teilen können sich bei derartigen Arbeitsspindel-Kühleinrichtungen jedoch Probleme mit der Abdichtung und der Funktionalität ergeben.

Aufgabe der Erfindung ist es, eine Arbeitsspindel-Kühleinrichtung und eine Werkzeugmaschinen-Bearbeitungseinheit mit einer derartigen Arbeitsspindel-Kühleinrichtung zu schaffen, die einen Ausgleich eines Versatzes zwischen den stationären und rotierenden Teilen unter Beibehaltung einer guten Abdichtung ermöglichen.

Diese Aufgabe wird durch eine Arbeitsspindel-Kühleinrichtung mit den Merkmalen des Anspruchs 1 und durch eine Werkzeugmaschinen-Bearbeitungseinheit mit den Merkmalen des Anspruchs 11 gelöst. Zweckmäßige Weiterbildungen und vorteilhafte Ausgestaltungen der Erfindung sind in den Unteransprüchen angegeben.

Bei der erfindungsgemäßen Arbeitsspindel-Kühleinrichtung weist die zur Abdichtung zwischen den stehenden und rotierenden Teilen vorgesehene Dichtungseinrichtung neben einer stationären Buchse, einer relativ zur stationären Buchse drehbaren Buchse und zwischen der stationären Buchse und der drehbaren Buchse angeordneten Dichtungen mindestens ein zwischen der stationären Buchse und der drehbaren Buchse angeordnetes, an beiden Buchsen anliegendes Stütz- und Führungselement auf, das den durch die beiden Dichtungen seitlich begrenzten Radialspalt in einen Zulaufbereich und einen Rücklaufbereich abgedichtet unterteilt. Durch das an beiden Buchsen anliegende Stütz- und Führungselement wird die Dichtungseinrichtung an der Arbeitspindel bzw. an den mit der Arbeitsspindel rotierenden Teilen geführt und kann sich so ohne Beeinträchtigung der Dichtwirkung an einen eventuellen Versatz zwischen der Arbeitsspindel und den stationären Teilen anpassen. Außerdem übernimmt das Stütz- und Führungselement nicht nur die Führung der Dichtungseinrichtung gegenüber der Arbeitsspindel bzw. den mit der Arbeitsspindel rotierenden Teilen, sondern sorgt auch für die abgedichtete Unterteilung des Radialspalts in den Zu- und Rücklaufbereich.

In einer zweckmäßigen Ausführung sind die zur Abdichtung eines Ringspalts zwischen der stationären Buchse und der drehbaren Buchse vorgesehenen Dichtungen als zwei an den Enden der stationären Buchse eingesetzte Dichtbuchsen mit einer stirnseitigen Dichtfläche ausgeführt. Durch die zur Anlage an der drehbaren Buchse bzw. einem Klemmring gelangenden Dichtflächen wird eine Absichtung zwischen der stationären und drehbaren Buchse erreicht.

In der drehbaren Buchse können mehrere in Umfangsrichtung verteilte radiale Zuführöffnungen und axial versetzte radiale Rückführöffnungen angeordnet sein. In der stationären Buchse können mehrere in Umfangsrichtung verteilte radiale Zuleitungsdurchgänge und axial versetzte radiale Rückleitungsdurchgänge vorgesehen sein.

In einer für den radialen Ausgleich besonders zweckmäßigen Ausführung kann die stationäre Buchse durch eine Haltebuchse in einem stationären Gehäuseteil des Gehäuses gehalten sein. Eine gute Ausgleichsmöglichkeit kann dadurch erreicht werden, dass die Haltebuchse durch elastisch nachgiebige Radialdichtungen gegenüber dem Gehäuseteil und durch elastisch nachgiebige Radialdichtungen gegenüber der stationären Buchse abgedichtet ist. In der Haltebuchse können zweckmäßigerweise ein Zuführungsdurchgang für die Kühlmittelzuführung und ein Rückführungsdurchgang für die Kühlmittelrückführung vorgesehen sein.

Bei einer weiteren zweckmäßigen Ausführung können in den Dichtungen, der stationären Buchse und der Haltebuchse miteinander in Verbindung stehende Leckagebohrungen angeordnet sein.

In einer für Arbeitsspindeln mit integrierter Spannvorrichtung und innerer Kühlmittelzufuhr besonders geeigneten und kompakten Ausführung kann in das Gehäuse der Arbeitsspindel-Kühleinrichtung eine Einrichtung zur Betätigung der Spannvorrichtung und/oder eine Drehdurchführung die Zuführung eines Arbeitsfluids zum Werkzeug bzw. Werkzeughalter integriert sein.

Die Erfindung betrifft außerdem eine Werkzeugmaschinen-Bearbeitungseinheit, die eine um eine Längsachse drehbar gelagerte, motorisch drehbare Arbeitsspindel mit Kühlmittelvorlaufkanälen für die Zuleitung eines Kühlmittels in die Arbeitsspindel und Kühlmittelrücklaufkanälen für die Rückführung des Kühlmittels aus der Arbeitsspindel sowie eine der Arbeitsspindel zugeordnete und vorstehende beschriebene Arbeitsspindel-Kühleinrichtung für Zuführung des Kühlmittels zu den Kühlmittelvorlaufkanälen und die Abführung des Kühlmittels aus den Kühlmittelrücklaufkanälen der Arbeitsspindel enthält.

In einer zweckmäßigen Ausführung kann die Arbeitsspindel über ein mit der Arbeitsspindel drehbares Anschlussteil mit der Arbeitsspindel-Kühleinrichtung verbunden sein. Das Anschlussteil kann als gesondertes Bauteil ausgeführt sein, das an der Arbeitsspindel befestigt werden und bei Bedarf ausgetauscht werden kann. Das Anschlussteil kann aber auch als Teil der Arbeitsspindel ausgebildet sein. In dem Anschlussteil sind zweckmäßigerweise Zu- und Rückleitungskanäle vorgesehen. Über die Zu- und Rückleitungskanäle in dem mit der Arbeitsspindel rotierenden Anschlussteil kann das über die Arbeitsspindel-Kühleinrichtung zugeführte Kühlfluid von radial innen nach radial außen zu den Kühlmittelvorlaufkanälen der Arbeitsspindel geleitet und von den Kühlmittelrücklaufkanälen von radial außen nach radial innen zur Arbeitsspindel-Kühleinrichtung 5 zurückgeführt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Bearbeitungseinheit einer Werkzeugmaschine mit einer Arbeitsspindel und einer Arbeitsspindel-Kühleinrichtung in einem Längsschnitt;
- **Figur 2**: eine vergrößerte Darstellung der Arbeitsspindel-Kühleinrichtung in einem ersten Längsschnitt;
- **Figur 3**: eine vergrößerte Darstellung der Arbeitsspindel-Kühleinrichtung in einem zweiten Längsschnitt und
- **Figur 4**: eine Detailansicht einer Dichtungs- und Führungseinrichtung der in Figur 2 gezeigten Arbeitsspindel-Kühleinrichtung.

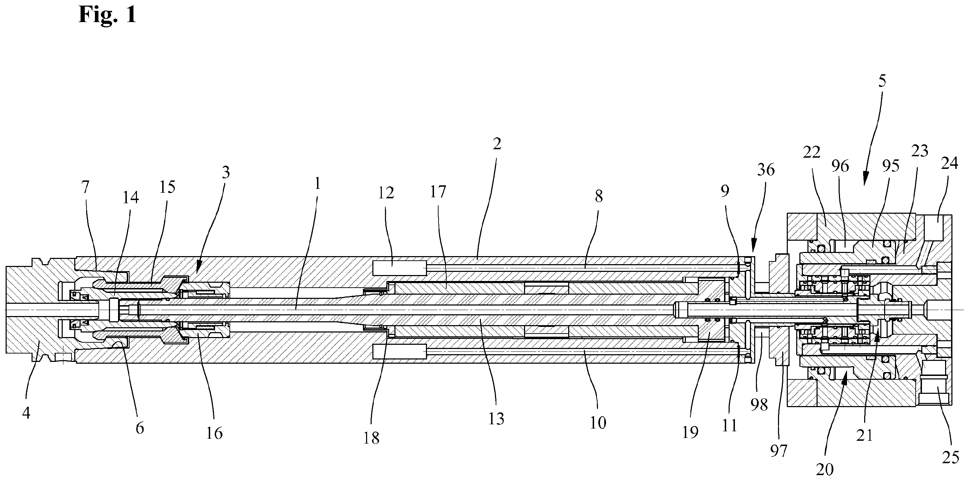

In Figur 1 ist eine Werkzeugmaschinen-Bearbeitungseinheit mit einer um eine Längsachse 1 drehbar gelagerten und motorisch drehbaren Arbeitsspindel 2, einer in der Arbeitsspindel 2 integrierten Spannvorrichtung 3 zur lösbaren Halterung eines Werkzeugs oder einer Werkzeugaufnahme 4 in der Arbeitsspindel 2 und einer Arbeitsspindel-Kühleinrichtung 5 für die Kühlung der Arbeitsspindel 2 gezeigt.

Die um die Längsachse 1 drehbare Arbeitsspindel 2 weist an ihrem vorderen Ende einen Innenkegel 6 für die Aufnahme eines hier als Hohlschaftkegel ausgeführten Kegelschafts 7 des Werkzeugs bzw. der Werkzeugaufnahme 4 auf. In der Arbeitsspindel 2 sind für Zuführung eines Kühlmittels in die Arbeitsspindel 2 mehrere in Umfangsrichtung voneinander beabstandete und zur Längsachse 1 parallele Kühlmittelvorlaufkanäle 8 mit einer Eintrittsöffnung 9 an der Rückseite der Arbeitsspindel 2 und für die Rückführung des Kühlmittels aus der Arbeitsspindel 2 mehrere zwischen den Kühlmittelvorlaufkanälen 8 angeordnete Kühlmittelrücklaufkanäle 10 mit einer Austrittsöffnung 11 an der Rückseite der Arbeitsspindel 2 vorgesehen. Die ebenfalls in Umfangsrichtung voneinander beabstandeten und zur Längsachse 1 parallelen Kühlmittelrücklaufkanäle 10 sind mit den Kühlmittelvorlaufkanälen 8 über einen Ringkanal 12 verbunden. Durch die Kühlmittelvorlaufkanäle 8, die Kühlmittelrücklaufkanäle 10 und den Ringkanal 12 wird in der Arbeitsspindel 2 ein Umlaufkanal gebildet, über den die Arbeitsspindel mit einer Umlaufkühlung gekühlt werden kann.

Die Spannvorrichtung 3 enthält eine innerhalb der Arbeitsspindel 2 zu deren Längsachse 1 konzentrisch angeordnete Zugstange 13, an deren vorderen Ende ein Spannkonus 14 eines an sich bekannten Spannsatzes befestigt ist. Der Spannsatz enthält eine um den Spannkonus 14 angeordnete Spannzange mit mehreren klauenförmigen Zangenelementen 15, die durch eine Spannhülse 16 geführt und durch axiale Verschiebung des Spannkonus 14 zur Klemmung bzw. Freigabe des Werkzeugs bzw. Werkzeughalter 4 radial beweglich sind. Die Zugstange 13 wird durch eine um diese konzentrisch angeordnete Spannfeder 17 zur Erzeugung der Einzugskraft des Spannsatzes nach hinten vorgespannt. Die z.B. als Tellerfederpaket, als Gasdruckfeder, als Federanordnung aus Faser-Kunststoff-Verbundwerkstoff oder auf andere Weise ausgeführte Spannfeder 17 ist an der einen Seite an einem Ringabsatz 18 innerhalb der Arbeitsspindel 4 und an der anderen Seite an einem Ringbund 19 im hinteren Bereich der Zugstange 13 abgestützt. Durch die Spannfeder 17 wird der Spannkonus 14 über die Zugstange 13 in die Arbeitsspindel 2 eingezogen, so dass die Zangenelementen 15 radial nach außen in eine Klemmstellung zur Halterung des Werkzeugs bzw. Werkzeughalters 4 gedrückt werden

Durch eine hier als Löseeinrichtung ausgebildete Betätigungseinrichtung 20 kann der Spannkonus 14 über die Zugstange 13 entgegen der Kraft der Spannfeder 17 nach vorne geschoben werden, so dass die Zangenelementen 15 radial nach innen in eine Lösestellung zur Freigabe des Werkzeugs bzw. Werkzeughalters 4 gelangen können. Bei der gezeigten Ausführung ist die im Folgenden noch näher erläuterte Betätigungseinrichtung 20 in die Arbeitsspindel-Kühleinrichtung 5 integriert. In die Arbeitsspindel-Kühleinrichtung 5 ist außerdem eine Drehdurchführung 21 für die Zuführung eines Arbeitsfluids zum Werkzeug bzw. Werkzeughalter 4 integriert. Für die Zuführung des Arbeitsfluids zum Werkzeug bzw. Werkzeughalter 4 ist die Zugstange 13 hohl ausgeführt.

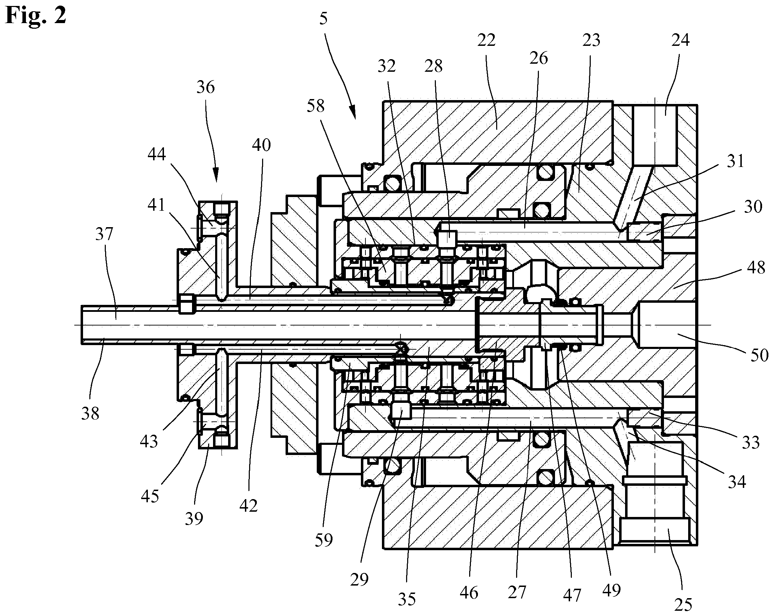

Wie aus Figur 2 hervorgeht, weist die dort gesondert dargestellte Arbeitsspindel-Kühleinrichtung 5 ein stationäres Gehäuse mit einem zylindrischen äußeren Gehäuseteil 22 und einem flanschartigen inneren Gehäuseteil 23 auf. In dem Gehäuseteil 23 sind eine radialer Zuführanschluss 24 für die Zuführung eines Kühlmittels in die Arbeitsspindel 2 und eine radiale Rückführöffnung 25 für die Rückführung eines Kühlmittels aus der Arbeitsspindel 2 zu deren Kühlung vorgesehen. Das Gehäuseteil 23 enthält außerdem einen mit der Zuführöffnung 24 in Verbindung stehenden Kühlmittelzuführkanal und einen mit der Rückführöffnung 25 in Verbindung stehenden Kühlmittelrückführkanal, die bei dem gezeigten Ausführungsbeispiel durch in Umfangsrichtung gegeneinander versetzte und von der Rückseite des Gehäuseteils 23 parallel zur Längsachse 1 der Arbeitsspindel 2 verlaufende Längsbohrungen 26 bzw. 27 mit unterschiedlicher Tiefe und Querbohrungen 28 bzw. 29 an den inneren Enden des Sacklochbohrungen gebildet werden. Die als Sacklochbohrung ausgebildete Längsbohrung 26 des Kühlmittelzuführkanal ist an ihrem mittels eines Stopfens 30 verschlossenen hinteren Ende über eine schräge Verbindungsbohrung 31 mit der Zuführöffnung 24 verbunden und mündet an ihrem vorderen Ende über die Querbohrung 28 in eine im Durchmesser erweiterte Öffnung 32 an der vorderen Stirnseite des Gehäuseteils 23 ein. Auch die als Sacklochbohrung ausgebildete Längsbohrung 27 des Kühlmittelrückführkanals ist an ihrem mittels eines Stopfens 33 verschlossenen hinteren Ende über eine schräge Verbindungsbohrung 34 mit der Rückführöffnung 25 verbunden und mündet an ihrem vorderen Ende über die Querbohrung 29 in die erweiterte Öffnung 32 an der vorderen Stirnseite des Gehäuseteils 23 ein.

In die im Durchmesser vergrößerte Öffnung 32 an der zur Arbeitsspindel 4 weisenden vorderen Stirnseite des Gehäuseteils 23 ragt ein schlankerer rückseitiger Teil 35 eines mit der Arbeitsspindel 4 fest verbundenen und mit dieser drehbaren Anschlussteils 36 hinein. Das mit einer Durchgangsbohrung 37 versehene Anschlussteil 36 enthält einen nach vorne vorstehenden, in die Zugstange eingreifenden Zapfen 38 und einen flanschartigen Mittelteil 39, über den das Anschlussteil 36 an der Rückseite der Arbeitsspindel 4 befestigt ist. In dem Anschlussteil 36 sind durch Längs- und Querbohrungen 40 und 41 bzw. 42 und 43 gebildete Zu- und Rückleitungskanäle vorgesehen, die über stirnseitige Anschlussbohrungen 44 und 45 mit den Eintrittsöffnungen 9 der Kühlmittelvorlaufkanäle 8 bzw. den Austrittsöffnungen 11 der Kühlmittelrücklaufkanäle 10 an der Rückseite der Arbeitsspindel 2 verbunden sind.

Über die Zu- und Rückleitungskanäle in dem mit der Arbeitsspindel 4 rotierenden Anschlussteil 36 kann das über die Arbeitsspindel-Kühleinrichtung 5 zugeführte Kühlfluid von radial innen nach radial außen zu den Kühlmittelvorlaufkanälen 8 geleitet und von den Kühlmittelrücklaufkanälen 10 von radial außen nach radial innen zur Arbeitsspindel-Kühleinrichtung 5 zurückgeführt werden. Bei der gezeigten Ausführung ist das Anschlussteil 36 als gesondertes Bauteil ausgeführt, es kann aber auch als Teil der Arbeitsspindel 4 ausgebildet sein.

Das mit der Arbeitsspindel 4 rotierende Anschlussteil 36 weist am hinteren Ende seines rückseitigen Teils 35 eine dort eingeschraubte und sich mit dem Anschlussteil 36 mitdrehende Dichtungsbuchse 46 auf. Die Dichtungsbuchse 46 enthält eine hintere stirnseitige Dichtfläche, an der eine vordere Dichtfläche einer nicht rotierenden Dichtungshülse 47 anliegt. Die zur Dichtungsbuchse 46 koaxiale Dichtungshülse 47 ist in einer in das Gehäuseteil 39 rückseitig eingesetzten Anschlussbuchse 48 axial verschiebbar geführt und wird durch eine Druckfeder 49 axial gegen die Dichtungsbuchse 46 gedrückt. Über die mit einem Anschluss 50 versehene Anschlussbuchse 48, die stationäre Dichtungshülse 47 und die rotierende Dichtungsbuchse 46 wird die Drehdurchführung 21 gebildet, durch die ein Kühlschmiermittel oder ein anderes Arbeitsfluid über das Anschlussteil 36 und die Zugstange 13 zum Werkzeug bzw. Werkzeugaufnahme 4 geleitet werden kann.

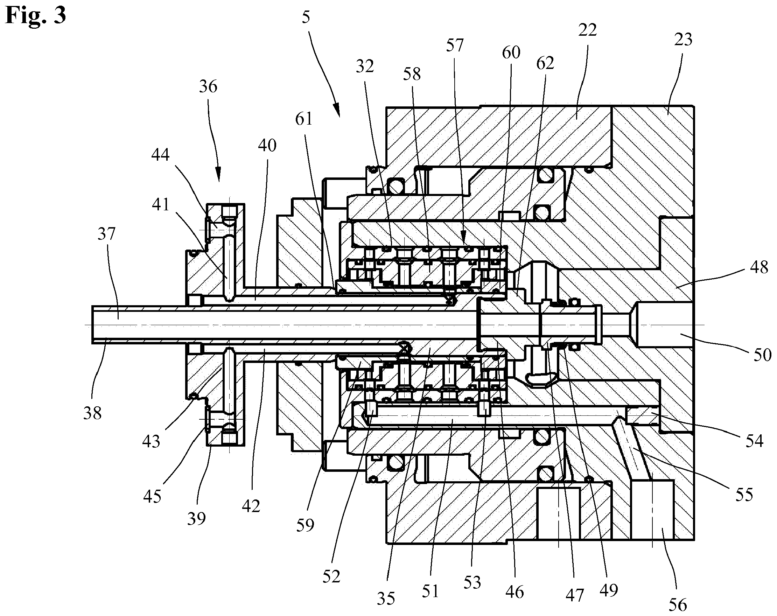

In Figur 3 ist ein gegenüber dem Längschnitt von Figur 2 versetzter weiterer Längschnitt durch die Arbeitsspindel-Kühleinrichtung 5 gezeigt. Aus dieser Darstellung geht hervor, dass in dem Gehäuseteil 39 neben den in Figur 2 gezeigten Längsbohrungen 26 und 27 des Kühlmittelzuführ- und Kühlmittelrückführkanals ein Leckagekanal zur Abführung eines Leckagefluids vorgesehen ist. Auch hier wird der Leckagekanal durch eine von der Rückseite des Gehäuseteils 23 parallel zur Längsachse 1 der Arbeitsspindel 2 verlaufende und als Sacklochbohrung ausgeführte Längsbohrung 51 gebildet, die über zwei voneinander beabstandete radiale Bohrungen 52 und 53 in die Öffnung 32 an der Vorderseite des Gehäuseteils mündet. Die an ihrem hinteren Ende über einen Stopfen 54 verschlossene Längsbohrung 51 ist über eine schräge Verbindungsbohrung 55 mit einer Ablauföffnung 56 verbunden.

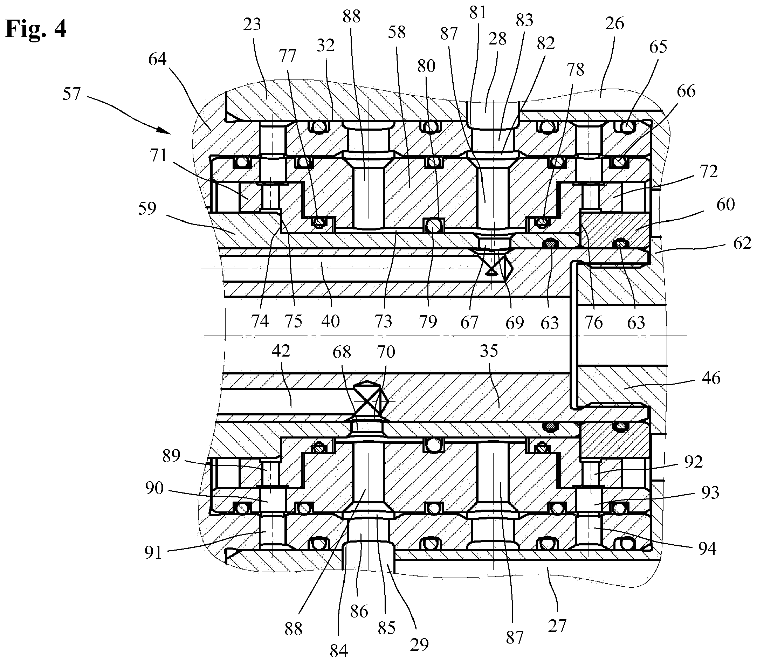

Innerhalb der im Durchmesser vergrößerten Öffnung 32 an der zur Arbeitsspindel 4 weisenden vorderen Stirnseite des Gehäuseteils 23 ist zwischen dem rückseitigen Teil 35 des mit der Arbeitsspindel 4 rotierenden Anschlussteils 36 und dem Gehäuseteil 23 des Gehäuses der Arbeitsspindel-Kühleinrichtung 5 eine in Figur 4 vergrößert dargestellte Dichtungseinrichtung 57 angeordnet. Die Dichtungseinrichtung 57 weist eine in dem Gehäuseteil 23 fest angeordnete stationäre Buchse 58 und eine relativ zu der stationären Buchse 58 drehbare, mit dem Anschlussteil 36 mitrotierende Buchse 59 auf. Die innerhalb der stationären Buchse 58 zu dieser koaxial angeordnete drehbare Buchse 59 ist auf dem rückseitigen Teil 35 des mit der Arbeitsspindel 4 rotierenden Anschlussteils 36 angeordnet und gemäß Figur 3 über einen Klemmring 60 zwischen einen Absatz 61 an dem rückseitigen Teil 35 des Anschlussteils 36 und einem Ringbund 62 der an dem hinteren Ende des rückseitigen Teils 35 des Anschlussteils 36 eingeschraubten Dichtungsbuchse 46 eingespannt. Die radial innere drehbare Dichtbuchse 59 und auch der Klemmring 60 sind über Radialdichtungen 63 gegenüber dem rückseitigen Teil 35 des mit der Arbeitsspindel 4 rotierenden Anschlussteils 36 abgedichtet.

Wie aus Figur 4 hervorgeht, wird die radial äußere, stationäre Buchse 58 innerhalb der Öffnung 32 des Gehäuseteils 23 durch eine von der Vorderseite eingesetzte Haltebuchse 64 fixiert. Die Haltebuchse 64 ist an ihrer Außenseite durch mehrere axial voneinander beabstandete Radialdichtungen 65 gegenüber dem Gehäuseteil 23 abgedichtet. Die innerhalb der Haltebuchse 64 angeordnete stationäre Buchse 58 ist an ihrer Außenseite durch mehrere axial voneinander beabstandete innere Radialdichtungen 66 gegenüber der Haltebuchse 64 abgedichtet. Die Radialdichtungen 63, 65 und 66 sind bei der gezeigten Ausführung als O-Ringe ausgeführt.

In der radial inneren, drehbaren Buchse 59 sind mehrere in Unfangsrichtung verteilte radiale Zuführöffnungen 67 und axial nach vorne in Richtung der Arbeitsspindel 2 versetzte radiale Rückführöffnungen 68 vorgesehen. Die als Durchgangsöffnungen ausgebildeten radialen Zuführöffnungen 67 fluchten mit radialen Eintrittöffnungen 69 an dem inneren Enden der Längsbohrungen 40 des im Anschlussteil 36 vorgesehenen Vorlaufkanals, während die ebenfalls als Durchgangsöffnungen ausgebildeten radialen Rückführöffnungen 68 mit radialen Austrittsöffnungen 70 an den inneren Enden der Längsbohrungen 42 des im Anschlussteil 36 vorgesehenen Rücklaufkanals fluchten.

Zwischen der radial inneren, drehbaren Buchse 59 und der radial äußeren, stationären Buchse 58 sind zwei als Dichtbuchsen ausgebildete, im Querschnitt abgestufte Dichtungen 71 und 72 zur Abdichtung eines Radialspalts 73 vorgesehen. Die in eine Abstufung an dem zur Arbeitsspindel 2 gewandten vorderen Ende der stationären Buchse 58 eingesetzte Dichtung 71 weist eine vordere stirnseitige Dichtfläche 74 zur abdichtenden Anlage an einer Ringfläche 75 eines Absatzes des Anschlussteils 36 auf. Die in eine Abstufung am hinteren Ende der stationären Buchse 58 eingesetzte Dichtung 72 enthält eine hintere stirnseitige Dichtfläche 76 zur abdichtenden Anlage an dem Klemmring 60. Die beiden als Dichtbuchsen ausgebildeten Dichtungen 71 und 72 sind außerdem über Dichtringe 77 und 78 radial gegenüber der stationären Buchse 58 abgedichtet.

Zwischen der radial äußeren, stationären Buchse 58 und der radial inneren, drehbaren Buchse 59 ist außerdem ein an beiden Buchsen 58 und 59 anliegendes Stütz- und Führungselement 79 angeordnet. Bei der gezeigten Ausführung ist das hier ringförmige und im Querschnitt kreisrunde, aus einem elastischen Material bestehende Stütz- und Führungselement 77 in einer Radialnut 80 an der Innenseite der stationären Buchse 58 eingelegt und liegt an der Außenseite der drehbaren Buchse 59 an. Das Stütz- und Führungselement 79 kann aber auch in einer Nut an der Außenseite der drehbaren Buchse 59 angeordnet sein. Durch die Anlage des Stütz- und Führungselements 77 an der drehbaren Buchse 59 wird die Dichtungseinrichtung 57 an dem sich mit der Arbeitsspindel 2 verbundenen und sich mit dieser mitdrehenden Anschlussteil 36 geführt, so dass sich die Dichtungseinrichtung 57 ohne Beeinträchtigung der Dichtwirkung an einen eventuellen Versatz zwischen der Arbeitsspindel und den stationären Teilen anpassen und diesen ausgleichen kann.

Die Haltebuchse 64 weist an ihrer Außenseite eine mit der Querbohrung 28 des Kühlmittelzuführkanals im Gehäuseteil 23 fluchtende und ringförmig umlaufende hintere Außennut 81 und an ihrer Innenseite eine der Außennut 81 gegenüberliegende und ebenfalls ringförmig umlaufende hintere Innennut 82 auf. Die hintere Außennut 81 und die hintere Innennut 82 sind durch mehrere über den Umfang verteilte Radialbohrungen 83 miteinander verbunden. Die Haltebuchse 64 weist an ihrer Außenseite ferner eine mit der Querbohrung 29 des Kühlmittelrückführkanals im Gehäuseteil 23 fluchtende und ringförmig umlaufende vordere Außennut 84 und an ihrer Innenseite eine der Außennut 84 gegenüberliegende und ebenfalls ringförmig umlaufende vordere Innennut 85 auf. Die vordere Außennut 84 und die vordere Innennut 85 sind durch mehrere über den Umfang verteilte Radialbohrungen 86 miteinander verbunden. Durch die hintere Außennut 81, die hintere Innennut 82 und die Radialbohrungen 83 wird in der Haltebuchse 64 ein Zuführungsdurchgang für die Zuführung des Kühlmittels gebildet, während die vordere Außennut 84, die vordere Innennut 85 und die Radialbohrungen 86 einen Rückführungsdurchgang für die Rückführung des Kühlmittels bilden.

Durch das an der Innenseite der stationären Buchse 58 angeordnete ringförmige Dicht- und Führungselement 79 wird der Radialspalt 73 in einen hinteren Zulaufbereich und einen davon abgedichteten vorderen Rücklaufbereich unterteilt. In der stationären Buchse 58 sind mehrere in Unfangsrichtung verteilte radiale Zuleitungsdurchgänge 87 und axial nach vorne in Richtung der Arbeitsspindel 2 versetzte radiale Rückleitungsdurchgänge 88 vorgesehen. Die Zuleitungsdurchgänge 87 sind derart angeordnet, dass sie an der Außenseite der stationären Buchse 58 in die hintere Innennut 82 der Haltebuchse 64 und an der Innenseite der stationären Buchse 58 in den hinteren Zulaufbereich des Radialspalts 73 münden. Die Rückleitungsdurchgänge 88 sind derart angeordnet, dass sie an der Außenseite der stationären Buchse 58 in die vordere Innennut 85 der Haltebuchse 64 und an der Innenseite in vorderen Rücklaufbereich des Radialspalts 73 münden.

In den buchsenförmigen Dichtungen 71 und 72, der stationären Buchse 58 und der Haltebuchse 64 sind außerdem miteinander in Verbindung stehende vordere radiale Leckagebohrungen 89, 90 und 91 sowie miteinander in Verbindung stehende hintere radiale Leckagebohrungen 92, 93 und 94 vorgesehen. Die Leckagebohrungen 89 und 92 in den Dichtungen 71 und 72 sind derart angeordnet, dass sie an deren Innenseite an den stirnseitigen Dichtflächen 74 und 76 der Dichtelemente 71 und 72 münden. Die Leckagebohrungen 91 und 94 in der Haltebuchse 59 münden in die in Figur 3 gezeigten Bohrungen 52 und 53 des im Gehäuseteil 23 angeordneten Leckagekanals. Durch die Leckagebohrungen 89 bis 94 kann an den Dichtflächen 74 und 76 austretendes Leckagefluid über die Längsbohrung 51, die Verbindungsbohrung 55 und die Ablauföffnung 56 nach außen geleitet werden.

Wie bereits vorstehend erwähnt, sind in der Arbeitsspindel-Kühleinrichtung 5 eine hier als Löseeinrichtung ausgebildete Betätigungseinrichtung 20 zur Verschiebung der in Figur 1 gezeigten Spannvorrichtung 3 in eine Lösestellung und eine Drehdurchführung 21 für die Zuführung eines Arbeitsfluids zum Werkzeug bzw. Werkzeughalter 4 integriert. Die Löseeinrichtung 20 enthält gemäß Figur 1 einen über ein Hydraulikfluid oder ein anderes Druckmedium axial verschiebbaren Druckkolben 95, der in einem zwischen dem äußeren Gehäuseteil 22 und dem inneren Gehäuseteil 23 gebildeten ringförmigen Druckraum 96 verschiebbar geführt ist. Durch den Druckkolben 95 ist die Zugstange 13 über eine Druckplatte 97 und mehrere innerhalb des Anschlussteils 36 axial verschiebbar geführte, in Umfangsrichtung verteilte, Druckbolzen 98 entgegen der Kraft der Spannfeder 17 nach vorne verschiebbar.

### Bezugszeichenliste

- 1: Längsachse
- 2: Arbeitsspindel
- 3: Spannvorrichtung
- 4: Werkzeugaufnahme
- 5: Arbeitsspindel-Kühleinrichtung
- 6: Innenkegel
- 7: Kegelschaft
- 8: Kühlmittelvorlaufkanal
- 9: Eintrittsöffnung
- 10: Kühlmittelrücklaufkanal
- 11: Austrittsöffnung
- 12: Ringkanal
- 13: Zugstange
- 14: Spannkonus
- 15: Zangenelemente
- 16: Spannhülse
- 17: Spannfeder
- 18: Ringabsatz
- 19: Ringbund
- 20: Betätigungseinrichtung
- 21: Drehdurchführung
- 22: Äußeres Gehäuseteil
- 23: Inneres Gehäuseteil
- 24: Zuführöffnung
- 25: Rückführöffnung
- 26: Längsbohrung
- 27: Längsbohrung
- 28: Querbohrung
- 29: Querbohrung
- 30: Stopfen
- 31: Verbindungsbohrung
- 32: Öffnung
- 33: Stopfen
- 34: Verbindungsbohrung
- 35: Rückseitiger Teil
- 36: Anschlussteil
- 37: Durchgangsbohrung
- 38: Zapfen
- 39: Mittelteil
- 40: Längsbohrung
- 41: Querbohrung
- 42: Längsbohrung
- 43: Querbohrung
- 44: Anschlussbohrung
- 45: Anschlussbohrung
- 46: Dichtungsbuchse
- 47: Dichtungshülse
- 48: Anschlussbuchse
- 49: Druckfeder
- 50: Anschluss
- 51: Längsbohrung
- 52: Bohrung
- 53: Bohrung
- 54: Stopfen
- 55: Verbindungsbohrung
- 56: Ablauföffnung
- 57: Dichtungseinrichtung
- 58: Stationäre Buchse
- 59: Drehbare Buchse
- 60: Klemmring
- 61: Ansatz
- 62: Ringbund
- 63: Radialdichtung
- 64: Haltebuchse
- 65: Radialdichtung
- 66: Radialdichtung
- 67: radiale Zuführöffnung
- 68: radiale Rückführöffnung
- 69: Eintrittsöffnung
- 70: Austrittsöffnung
- 71: Dichtung
- 72: Dichtung
- 73: Radialspalt
- 74: Vordere Dichtfläche
- 75: Ringfläche
- 76: Hintere Dichtfläche
- 77: Dichtring
- 78: Dichtring
- 79: Dicht- und Führungselement
- 80: Radialnut
- 81: Hintere Außennut
- 82: Hintere Innennut
- 83: Radialbohrung
- 84: Vordere Außennut
- 85: Vordere Innenut
- 86: Radialbohrung
- 87: Zuleitungsdurchgang
- 88: Rückleitungsdurchgang
- 89: Leckagebohrung
- 90: Leckagebohrung
- 91: Leckagebohrung
- 92: Leckagebohrung
- 93: Leckagebohrung
- 94: Leckagebohrung
- 95: Druckkolben
- 96: Druckraum
- 97: Druckplatte
- 98: Druckbolzen

## Patentansprüche

1. Arbeitsspindel-Kühleinrichtung (5) mit einem Gehäuse (22, 23), einem innerhalb des Gehäuses (22, 23) angeordneten Zuführkanal (26, 28), einem innerhalb des Gehäuses (22, 23) angeordneten Rückführkanal (27, 29) und einer innerhalb des Gehäuses (22, 23) angeordneten Dichtungseinrichtung (57), die eine stationäre Buchse (58), eine relativ zur stationären Buchse (58) drehbare Buchse (59) und zwischen der stationären Buchse (58) und der drehbaren Buchse (59) angeordnete Dichtungen (71, 72) zur Abdichtung eines Ringspalts (73) zwischen der stationären Buchse (58) und der drehbaren Buchse (59) enthält, **dadurch gekennzeichnet, dass** die Dichtungseinrichtung (57) ferner mindestens ein zwischen der stationären Buchse (58) und der drehbaren Buchse (59) angeordnetes, an beiden Buchsen (58, 59) anliegendes Stütz- und Führungselement (79) enthält, das den durch die beiden Dichtungen (71, 72) seitlich begrenzten Radialspalt (73) in einen Zulaufbereich und einen Rücklaufbereich abgedichtet unterteilt.

2. Arbeitsspindel-Kühleinrichtung (5) nach Anspruch 1, **dadurch gekennzeichnet, dass** die Dichtungen (71, 72) als zwei an den Enden der stationären Buchse (58) eingesetzte stationäre Dichtbuchsen mit einer stirnseitigen Dichtfläche (74, 76) ausgebildet sind.

3. Arbeitsspindel-Kühleinrichtung (5) nach Anspruch 1 oder 2, **dadurch gekennzeichnet, dass** die Dichtungen (71, 72) durch Dichtringe (77, 78) gegenüber der stationären Buchse (58) abgedichtet sind.

4. Arbeitsspindel-Kühleinrichtung (5) nach einem der Ansprüche 1 bis 3, **dadurch gekennzeichnet, dass** in der drehbaren Buchse (59) mehrere in Umfangsrichtung verteilte radiale Zuführöffnungen (67) und axial versetzte radiale Rückführöffnungen (68) angeordnet sind.

5. Arbeitsspindel-Kühleinrichtung (5) nach einem der Ansprüche 1 bis 4, **dadurch gekennzeichnet, dass** in der stationären Buchse (58) mehrere in Umfangsrichtung verteilte radiale Zuleitungsdurchgänge (87) und axial versetzte radiale Rückleitungsdurchgänge (88) angeordnet sind.

6. Arbeitsspindel-Kühleinrichtung (5) nach einem der Ansprüche 1 bis 5, **dadurch gekennzeichnet, dass** die stationäre Buchse (58) durch eine Haltebuchse (64) in einem Gehäuseteil (23) des Gehäuses (22, 23) gehalten ist.

7. Arbeitsspindel-Kühleinrichtung (5) nach Anspruch 6, **dadurch gekennzeichnet, dass** die Haltebuchse (64) durch elastisch nachgiebige Radialdichtungen (65) gegenüber dem Gehäuseteil (23) und durch elastisch nachgiebige Radialdichtungen (66) gegenüber der stationären Buchse (58) abgedichtet ist.

8. Arbeitsspindel-Kühleinrichtung (5) nach Anspruch 6 oder 7, **dadurch gekennzeichnet, dass** die Haltebuchse (64) einen Zuführungsdurchgang (81, 82, 83) für die Kühlmittelzuführung und einen Rückführungsdurchgang (84, 85, 86) für die Kühlmittelrückführung enthält.

9. Arbeitsspindel-Kühleinrichtung (5) nach einem der Ansprüche 6 bis 8, **dadurch gekennzeichnet, dass** in den Dichtungen (71,72), der stationären Buchse (58) und der Haltebuchse (64) miteinander in Verbindung stehende Leckagebohrungen (89 - 94) angeordnet sind.

10. Arbeitsspindel-Kühleinrichtung (5) nach einem der Ansprüche 1 bis 9, **dadurch gekennzeichnet, dass** in dem Gehäuse (22, 23) eine Betätigungseinrichtung (20) zur Betätigung einer Spannvorrichtung und/oder eine Drehdurchführung (21) die Zuführung eines Arbeitsfluids zu einem Werkzeug bzw. Werkzeughalter integriert ist.

11. Werkzeugmaschinen-Bearbeitungseinheit, die eine um eine Längsachse (1) drehbar gelagerte, motorisch drehbare Arbeitsspindel (2) mit Kühlmittelvorlaufkanälen (8) für die Zuleitung eines Kühlmittels in die Arbeitsspindel (2) und Kühlmittelrücklaufkanälen (10) für die Rückführung des Kühlmittels aus der Arbeitsspindel (2) sowie eine der Arbeitsspindel (2) zugeordnete Arbeitsspindel-Kühleinrichtung (5) für Zuführung des Kühlmittels zu den Kühlmittelvorlaufkanälen (8) und die Abführung des Kühlmittels aus den Kühlmittelrücklaufkanälen (10) der Arbeitsspindel (2) enthält, **dadurch gekennzeichnet, dass** die Arbeitsspindel-Kühleinrichtung (5) nach einem der Ansprüche 1 bis 10 ausgebildet ist.

12. Werkzeugmaschinen-Bearbeitungseinheit nach Anspruch 11, **dadurch gekennzeichnet, dass** die Arbeitsspindel (2) über ein mit der Arbeitsspindel (29 drehbares Anschlussteil (36) mit der Arbeitsspindel-Kühleinrichtung (5) verbunden ist.

13. Werkzeugmaschinen-Bearbeitungseinheit nach Anspruch 12, **dadurch gekennzeichnet, dass** in dem Anschlussteil (36) Zu- und Rückleitungskanäle (40, 41, 42, 43) angeordnet sind.

## Claims

1. Working spindle cooling device (5) having a housing (22, 23), a supply channel (26, 28) arranged within the housing (22, 23), a return channel (27, 29) arranged within the housing (22, 23) and a sealing device (57) arranged within the housing (22, 23) which contains a stationary bushing (58), a bushing (59) rotatable relative to the stationary bushing (58) and seals (71, 72) arranged between the stationary bushing (58) and the rotatable bushing (59) to seal an annular gap (73) between the stationary bushing (58) and the rotatable bushing (59), **characterised in that** the sealing device (57) also contains at least one support and guide element (79) arranged between the stationary bushing (58) and the rotatable bushing (59) and resting on both bushings (58, 59) which subdivides in sealed-off manner the radial gap (73) limited laterally by the two seals (71, 72) into an inflow region and a return region.

2. Working spindle cooling device (5) according to claim 1, **characterised in that** the seals (71, 72) are formed as two stationary sealing bushes inserted at the ends of the stationary bushing (58) and having an end face-side sealing surface (74, 76).

3. Working spindle cooling device (5) according to claim 1 or 2, **characterised in that** the seals (71, 72) are sealed off with respect to the stationary bushing (58) by sealing rings (77, 78).

4. Working spindle cooling device (5) according to one of claims 1 to 3, **characterised in that** several peripherally distributed radial supply openings (67) and axially offset radial return openings (68) are arranged in the rotatable bushing (59).

5. Working spindle cooling device (5) according to one of claims 1 to 4, **characterised in that** several peripherally distributed radial supply passages (87) and axially offset radial return passages (88) are arranged in the stationary bushing (58).

6. Working spindle cooling device (5) according to one of claims 1 to 5, **characterised in that** the stationary bushing (58) is held in a housing part (23) of the housing (22, 23) by a holding bushing (64).

7. Working spindle cooling device (5) according to claim 6, **characterised in that** the holding bushing (64) is sealed off with respect to the housing part (23) by elastically flexible radial seals (65) and with respect to the stationary bushing (58) by elastically flexible radial seals (66).

8. Working spindle cooling device (5) according to claim 6 or 7, **characterised in that** the holding bushing (64) contains a supply passage (81, 82, 83) for coolant supply and a return passage (84, 85, 86) for coolant return.

9. Working spindle cooling device (5) according to one of claims 6 to 8, **characterised in that** leakage bores (89 - 94) connected to one another are arranged in the seals (71, 72), the stationary bushing (58) and the holding bushing (64).

10. Working spindle cooling device (5) according to one of claims 1 to 9, **characterised in that** an actuating device (20) for actuating a clamping device and/or a rotary seal (21) for supplying a working fluid to a tool or tool holder is integrated in the housing (22, 23).

11. Machine tool processing unit which contains a working spindle (2) mounted to be rotatable about a longitudinal axis (1) and rotatable by motor with coolant initial feed channels (8) for supplying a coolant to the working spindle (2) and coolant return channels (10) for returning coolant from the working spindle (2) and a working spindle cooling device (5) assigned to the working spindle (2) for supplying coolant to the coolant initial feed channels (8) and discharging coolant from the coolant return channels (10) of the working spindle (2), **characterised in that** the working spindle cooling device (5) is designed according to one of claims 1 to 10.

12. Machine tool processing unit according to claim 11, **characterised in that** the working spindle (2) is connected to the working spindle cooling device (5) via a connector (36) which is rotatable with the working spindle (29.

13. Machine tool processing unit according to claim 12, **characterised in that** supply channels and return channels (40, 41, 42, 43) are arranged in the connector (36).

## Revendications

1. Système de refroidissement d'arbre moteur (5) avec un boîtier (22, 23), un canal d'amenée (26, 28) disposé à l'intérieur du boîtier (22, 23), un canal de retour (27, 29) disposé à l'intérieur du boîtier (22, 23) et un système d'étanchéité (57) disposé à l'intérieur du boîtier (22, 23), qui contient une douille stationnaire (58), une douille rotative (59) par rapport à la douille stationnaire (58) et des joints d'étanchéité (71, 72) disposés entre la douille stationnaire (58) et la douille rotative (59), pour étanchéifier une fente annulaire (73) entre la douille stationnaire (58) et la douille rotative (59), **caractérisé en ce que** le système d'étanchéité (57) contient en outre au moins un élément d'appui et de guidage (79) disposé entre la douille stationnaire (58) et la douille rotative (59), reposant au niveau des deux douilles (58, 59), qui divise avec étanchéification la fente radiale (73) délimitée latéralement par les deux joints d'étanchéité (71, 72) dans une zone d'admission et dans une zone de retour.

2. Système de refroidissement d'arbre moteur (5) selon la revendication 1, **caractérisé en ce que** les joints d'étanchéité (71, 72) sont réalisés en tant que deux douilles étanches stationnaires insérées au niveau des extrémités de la douille stationnaire (58) avec une surface étanche (74, 76) côté frontal.

3. Système de refroidissement d'arbre moteur (5) selon la revendication 1 ou 2, **caractérisé en ce que** les joints d'étanchéité (71, 72) sont étanchéifiés par des bagues étanches (77, 78) par rapport à la douille stationnaire (58).

4. Système de refroidissement d'arbre moteur (5) selon l'une quelconque des revendications 1 à 3, **caractérisé en ce que** plusieurs ouvertures d'amenée (67) radiales réparties dans la direction périphérique et des ouvertures de retour (68) radiales décalées de manière axiale sont disposées dans la douille rotative (59) .

5. Système de refroidissement d'arbre moteur (5) selon l'une quelconque des revendications 1 à 4, **caractérisé en ce que** plusieurs passages de conduit d'arrivée (87) radiaux répartis dans la direction périphérique et des passages de conduit de retour (88) radiaux décalés de manière axiale sont disposés dans la douille stationnaire (58).

6. Système de refroidissement d'arbre moteur (5) selon l'une quelconque des revendications 1 à 5, **caractérisé en ce que** la douille stationnaire (58) est maintenue par une douille de maintien (64) dans une partie de boîtier (23) du boîtier (22, 23).

7. Système de refroidissement d'arbre moteur (5) selon la revendication 6, **caractérisé en ce que** la douille de maintien (64) est étanchéifiée par rapport à la partie de boîtier (23) par des joints d'étanchéité radiaux (65) élastiquement souples et par rapport à la douille stationnaire (58) par des joints d'étanchéité radiaux (66) élastiquement souples.

8. Système de refroidissement d'arbre moteur (5) selon la revendication 6 ou 7, **caractérisé en ce que** la douille de maintien (64) contient un passage d'amenée (81, 82, 83) pour l'amenée de liquide de refroidissement et un passage de retour (84, 85, 86) pour le retour de liquide de refroidissement.

9. Système de refroidissement d'arbre moteur (5) selon l'une quelconque des revendications 6 à 8, **caractérisé en ce que** des alésages de fuite (89 - 94) reliés les uns aux autres sont disposés dans les joints d'étanchéité (71, 72), la douille stationnaire (58) et la douille de maintien (64).

10. Système de refroidissement d'arbre moteur (5) selon l'une quelconque des revendications 1 à 9, **caractérisé en ce qu'**un système d'actionnement (20) pour actionner un dispositif de serrage et/ou un passage rotatif (21) pour l'amenée d'un fluide de travail à un outil ou à un porte-outil sont intégrés dans le boîtier (22, 23).

11. Unité d'usinage de machines-outils, qui contient un arbre moteur (2) pouvant tourner de manière motorisée, monté de manière à pouvoir tourner autour d'un axe longitudinal (1), avec des canaux d'alimentation de liquide de refroidissement (8) pour l'arrivée d'un liquide de refroidissement dans l'arbre moteur (2) et des canaux de retour de liquide de refroidissement (10) pour le retour du liquide de refroidissement hors de l'arbre moteur (2) ainsi qu'un système de refroidissement d'arbre moteur (5) associé à l'arbre moteur (2), pour amener le liquide de refroidissement aux canaux d'alimentation de liquide de refroidissement (8) et pour évacuer le liquide de refroidissement hors des canaux de retour de liquide de refroidissement (10) de l'arbre moteur (2), **caractérisée en ce que** le système de refroidissement d'arbre moteur (5) est réalisé selon l'une quelconque des revendications 1 à 10.

12. Unité d'usinage de machines-outils selon la revendication 11, **caractérisée en ce que** l'arbre moteur (2) est relié au système de refroidissement d'arbre moteur (5) par l'intermédiaire d'une partie de raccordement (36) pouvant tourner avec l'arbre moteur (29.

13. Unité d'usinage de machines-outils selon la revendication 12, **caractérisée en ce que** des canaux d'arrivée et de retour (40, 41, 42, 43) sont disposés dans la partie de raccordement (36).
